# EUROPÄISCHE PATENTSCHRIFT

(11) **EP 1 676 072 B1**
(45) Veröffentlichungstag und Bekanntmachung des Hinweises auf die Patenterteilung: **04.08.2010**
(21) Anmeldenummer: 04786859.1
(22) Anmeldetag: 25.09.2004
(51) Int. Cl.: F16L 23/18

(54) **FLANSCHVERBINDUNG**
FLANGED JOINT
RACCORD A BRIDES

(30) Priorität: 23.10.2003 DE 20316372 U
(43) Veröffentlichungstag der Anmeldung: 05.07.2006
(73) Patentinhaber: Fey Lamellenringe GmbH & Co. KG, 86343 Königsbrunn (DE)
(72) Erfinder: HOLZHEU, Peter, 86343 Königsbrunn (DE)
(74) Vertreter: Wiedemann, Markus
(86) Internationale Anmeldenummer: PCT/DE2004/002143
(87) Internationale Veröffentlichungsnummer: WO 2005/040661

(56) Entgegenhaltungen:
- DE-A- 4 136 799
- GB-A- 1 124 199
- US-A- 4 350 346
- US-A- 5 131 694
- US-A1- 2002 074 800

## Beschreibung

### Stand der Technik

Die Erfindung geht aus von einer Flanschverbindung mit wenigstens einer zwischen den einander zugewandten Flanschflächen von ein unter Druck stehendes Medium speichernder oder führender Bauelemente wie Leitungen oder Behälterteile gehaltenen Flachdichtung, nach der Gattung des Anspruchs 1.

Solche Flanschverbindungen sind aus dem Stand der Technik z.B. aus der US 5 131 694, wobei die Flachdichtung die Aufgabe hat, die Flanschverbindung gegenüber der Umgebung möglichst hermetisch abzudichten. Eine Abdichtung der Flanschverbindung mit keiner oder äußerst geringer Leckage von umweltgefährdenden Medien wie beispielsweise Ölen, Säuren oder toxischen Gasen gewinnt vor dem Hintergrund des gestiegenen Umweltbewusstseins und gesetzlicher Bestimmungen wie beispielsweise der Luftverordnung TA 2003 oder der VDI-Norm 2440 immer mehr an Bedeutung.

Solche Flanschverbindungen haben jedoch häufig den Nachteil, dass sich die Flachdichtungen aufgrund ständigen Kontakts mit den durch die Leitungen geführten oder durch die Behälter gespeicherten aggressiven und/oder unter hohen Temperaturen stehenden Medien zersetzen oder auflösen und nach einer gewissen Zeit personalintensiv ersetzt werden muss.

Der Erfindung liegt demgegenüber die Aufgabe zugrunde, eine Flanschverbindung der eingangs erwähnten Art derart weiter zu bilden, dass Ihre Flachdichtung eine höhere Lebensdauer aufweist und weitgehend wartungsfrei ist.

Erfindungsgemäß wird diese Aufgabe durch die Merkmale des Anspruchs 1 gelöst.

### Vorteile der Erfindung

Der Erfindung liegt der Gedanke zugrunde, in Richtung des Druckgefälles von der Druckseite zur Umweltseite gesehen der Flachdichtung wenigstens einen in einer Ringnut gehaltenen und gegen einen der Ringnut radial gegenüber liegenden Arbeitsdurchmesser im wesentlichen spaltlos gespannten Lamellenring vorzuordnen. Im Zusammenhang mit Lamellenringen wird unter dem Arbeitsdurchmesser der Durchmesser der Fläche verstanden, welche der den Lamellenring aufnehmenden Ringnut gegenüberliegt und entlang welcher das Druckmedium infolge des Druckgefälles von der Druckseite zur Umweltseite strömen würde.

Die Vorspannung des Lamellenrings sorgt für eine spaltfreie Abdichtung gegenüber dem Arbeitsdurchmesser, während zum Nutgrund der Ringnut hin ein kleiner Spalt freigelassen ist. Die Wirkung eines solchen Lamellenrings beruht deshalb auf dem gleichen Effekt wie er bei Spalt- oder Labyrinthdichtungen auftritt, d.h. er lenkt die Strömung vom Arbeitsdurchmesser weg zum Nutgrund hin und bildet dort aufgrund des geringen noch frei gelassenen Spalts eine Drossel, an welcher Druckenergie verloren geht. Der Lamellenring senkt folglich infolge Strömungsumlenkung und Drosselung ein hohes Druckniveau auf ein niedriges Niveau ab und verringert eine Strömung am Arbeitsdurchmesser vorbei.

Der Lamellenring wirkt als Schutzdichtung für die nachgeordnete Flachdichtung und schützt diese vor Verschleiß, insbesondere vor hohen Drücken, hohen Temperaturen und aggressiven Medien wie Säuren oder toxischen Gasen. Solche Lamellenringe bestehen aus einem dünnen Stahlband oder aus einem anderen Material, sind konstruktiv einfach und benötigen einen geringen Einbauraum in axialer wie in radialer Richtung. Deshalb sind sie in bestehende Flanschverbindungen leicht nachrüstbar. Weiterhin sind sie hitzebeständig und bruchfest, weshalb sie sich hervorragend eignen, um die nachgeordnete Flachdichtung vor aggressiven und unter hohen Temperaturen stehenden Medien zu schützen.

Durch das erfindungsgemäße Vorsehen der Lamellenringe kann die Lebensdauer der Flachdichtungen erheblich verlängert werden kann. Vor dem Hintergrund, dass beispielsweise in technischen Anlagen und im Apparatebau oft eine Vielzahl von Flanschverbindungen vorhanden ist, können durch die erfindungsgemäße Flanschverbindung Wartungsaufwand und -kosten erheblich reduziert werden.

Durch die in den Unteransprüchen aufgeführten Maßnahmen sind vorteilhafte Weiterbildungen und Verbesserungen der im Anspruch 1 angegebenen Erfindung möglich.

Bevorzugt ist der Lamellenring in der Ringnut mit geringem Axialspiel gehalten, wodurch eine Wärmeausdehnung ermöglicht wird.

Gemäß einer Weiterbildung können mehrere Lamellenringe in der Ringnut axial hintereinander angeordnet sein, wobei es im Hinblick auf eine mehrfache labyrinthartige Umlenkung der Strömung des Druckmediums günstig ist, wenn von den mehreren Lamellenringen wenigstens der der Druckseite zugewandte Lamellenring und der der Umweltseite zugewandte Lamellenring gegen den Arbeitsdurchmesser und wenigstens ein axial zwischen diesen Lamellenringen angeordneter Lamellenring gegen den Nutgrund der Ringnut spannen. Nach Art einer Labyrinthdichtung wird das Medium dann zwischen den einzelnen Lamellenringen folglich mehrmals umgelenkt, was Verwirbelungen und Reibungsverluste mit sich bringt und folglich Druckenergie aufgezehrt wird, was die Dichtwirkung vorteilhaft erhöht. Bevorzugt werden bei mehreren, in der Ringnut angeordneten Lamellenringen solche gleichen Typs verwendet.

Hierbei können beispielsweise ein oder mehrere einfach gewundene Lamellenringe mit axialer Stoßöffnung aus einem in einer Ebene verlaufenden Stahlband zum Einsatz kommen. Solche einfach gewundenen Lamellenringe sind besonders kostengünstig herstellbar und ihre Vorspannung gegen den Nutgrund bzw. gegen den Arbeitsdurchmesser leicht voreinstellbar.

Alternativ können einfach gewundene Teller-Lamellenringe aus einem nach Art einer Tellerfeder tellerförmig geformtem Stahlband in die Ringnut eingesetzt werden. Aufgrund der Neigung der Lamellenringe können die Kanten des Stahlbands als Dichtkanten an den Nutflächen der Ringnut unter Vorspannung dicht anliegen, woraus sich ebenfalls eine verbesserte Dichtwirkung ergibt. Besonders vorteilhaft ist, wenn wenigstens ein Paar aus zwei bezüglich der Tellerform axial gegenläufig angeordneter Teller-Lamellenringe verwendet werden, da in diesem Fall zwei solcher Dichtkanten vorhanden sind.

Gemäß einer weiteren Ausführungsform finden Doppelwindungslamellenringe Anwendung, wobei die Enden der Doppelwindungen im entspannten Zustand des Doppelwindungslamellenrings von einer durch den Rest des Doppelwindungslamellenrings gebildeten Kreisform abweichend nach innen oder nach außen ragen und im gespannten Zustand des Doppelwindungslamellenrings mit dieser Kreisform fluchten. Die bezüglich der Kreisform nach innen oder außen ragenden Enden sorgen dann dafür, dass die Doppelwindungen im eingebauten Zustand nach außen oder nach innen gedrückt werden. Die Rundheit der geschlossenen Doppelwindung über 360 Grad gewährleistet einen festen Kontakt zum Nutgrund der Ringnut bzw. zum Arbeitsdurchmesser.

Wenn die beiden durch die Flanschverbindung gefügten Bauelemente einen radialen Überlappungsbereich aufweisen, dergestalt, dass eines der Bauelemente einen axial vorspringenden Ringbund aufweist, welcher in eine komplementäre, ringförmige Ausnehmung des anderen Bauelements eingreift, deren radial innere Umfangsfläche den Arbeitsdurchmesser bildet, kann eine nach radial außen offene Ringnut in dem axial vorspringenden Ringbund des einen Bauelements ausgebildet sein, welche den oder die Lamellenringe aufnimmt.

### Zeichnungen

Ausführungsbeispiele der Erfindung sind in der Zeichnung dargestellt und in der nachfolgenden Beschreibung näher erläutert. In der Zeichnung zeigt:
- Fig.1: eine Querschnittsdarstellung einer erfindungsgemäßen Flanschverbindung in einer bevorzugten Ausführungsform mit drei axial hintereinander angeordneten Doppelwindungslamellenringen ;
- Fig.2: eine Einzeldraufsicht eines der Doppelwindungslamellenringe von Fig.1 im entspannten Zustand;
- Fig.3: eine Seitenansicht des Doppelwindungslamellenrings von Fig.2;
- Fig.4: eine Einzeldraufsicht des Doppelwindungslamellenrings von Fig.2 im gespannten Zustand;
- Fig.5: einen vergrößerten Ausschnitt von Fig.1;
- Fig.6: einen vergrößerten Ausschnitt einer weiteren Ausführungsform;
- Fig.7: einen vergrößerten Ausschnitt einer weiteren Ausführungsform;
- Fig.8: einen vergrößerten Ausschnitt einer weiteren Ausführungsform.

### Beschreibung der Ausführungsbeispiele

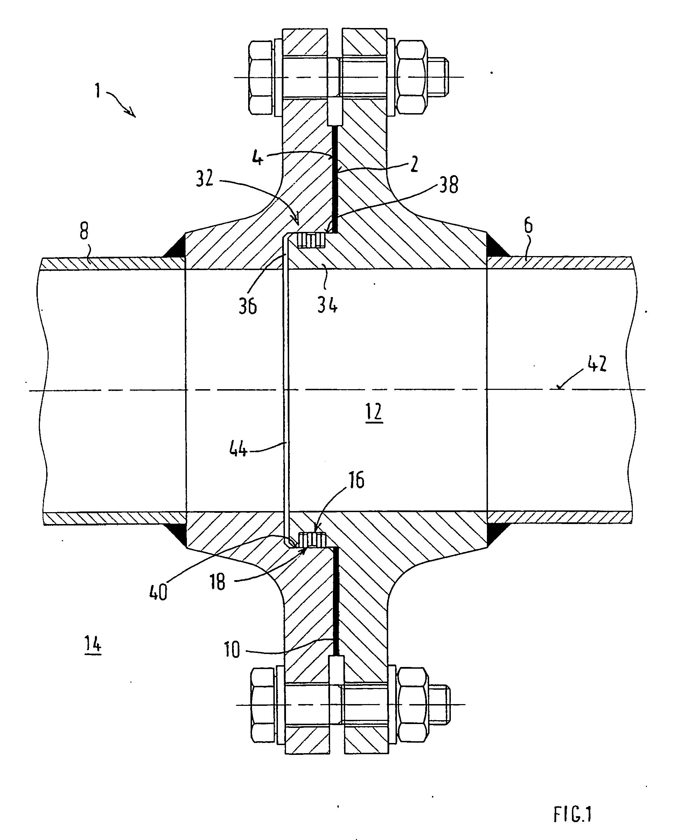

In Fig.1 ist eine bevorzugte Ausführungsform einer Flanschverbindung 1 gemäß der Erfindung gezeigt. Die Flanschverbindung 1 beinhaltet eine zwischen den einander zugewandten ebenen Flanschflächen 2, 4 zweier ein unter Druck stehendes Medium speichernder oder führender Bauelemente 6, 8 gehaltene Flachdichtung 10. Bei den Bauelementen handelt es sich beispielsweise um zylindrische, gasführende Rohre 6, 8 oder Leitungen, wobei das Gas unter einem gegenüber dem Umgebungsdruck erhöhten Druck steht. Denkbar ist aber auch jegliche andere Flanschverbindung, beispielsweise zur Befestigung von Behälterbauteilen. Dabei kann die Flanschverbindung ruhen oder bewegt sein, beispielsweise bei sich drehenden Rohren. Die Flachdichtung 10 soll als hermetische Dichtung jegliches Austreten des Gases aus dem Inneren 12 der Rohre verhindern.

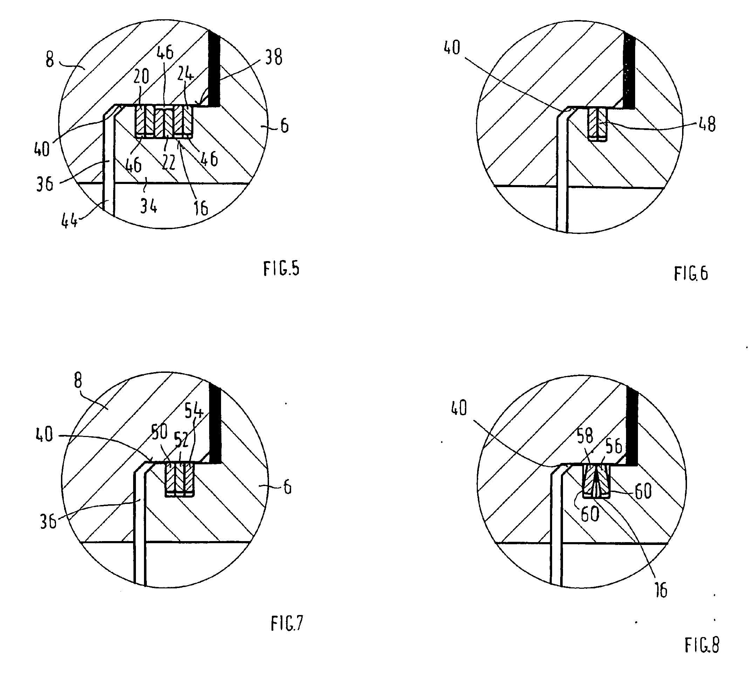

Erfindungsgemäß ist in Richtung des Druckgefälles vom höheren Druck einer Druckseite im Inneren 12 der Rohre 6, 8 zum niedrigeren Druck auf einer Umweltseite 14 gesehen der Flachdichtung 10 wenigstens ein in einer Ringnut 16 gehaltener Lamellenring 18 vorgeordnet, der gegen einen radial gegenüber liegenden Arbeitsdurchmesser 40 im wesentlichen spaltlos gespannt ist. Vorzugsweise ist dies dadurch realisiert, dass ein oder mehrere Lamellenringe 18 in der Ringnut 16 mit geringem Axialspiel parallel zur Ebene der Flanschflächen 2, 4 angeordnet sind, vorzugsweise sind gemäß der Ausführungsform von Fig.1 in der Ringnut drei Doppelwindungslamellenringe 20, 22, 24 axial hintereinander angeordnet (Fig.5).

Die Doppelwindungs-Lamellenringe 20, 22, 24 bestehen vorzugsweise je aus zwei übereinander liegenden Lagen eines gleich breiten Stahlbands oder eines Bands aus einem anderem Metall. Als Stahlmaterial wird bevorzugt ein Federbandstahl C75, CK60 oder ein Chromnickelstahl Nr. 1.4310, Nr. 1.4571 oder Nr. 1.4980 verwendet.

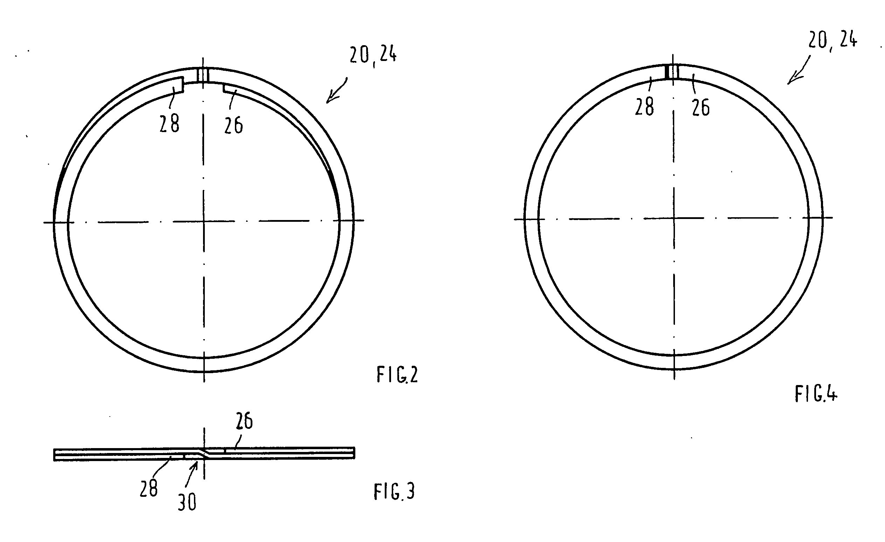

In Fig.2 ist der der Druckseite zugewandte, gegen den Arbeitsdurchmesser 40 und hier deshalb nach außen spannende Doppelwindungslamellenring 20 gezeigt, welcher identisch mit dem zur Umweltseite weisenden DoppelwindungsLamellenring 24 ist. Bei solchen nach radial außen spannenden Doppelwindungslamellenringen 20, 24 ragen die freien Enden 26, 28 der Doppelwindungen im entspannten, in Fig.2 gezeigten Zustand der Doppelwindungslamellenringe 20, 24 von einer durch den Rest des Doppelwindungslamellenrings 20 gebildeten Kreisform abweichend nach innen. Die nach innen ragenden Enden 26, 28 sorgen dann dafür, dass die Doppelwindungen der Doppelwindungslamellenringe 20, 24 im eingebauten Zustand nach radial außen, gegen den Arbeitsdurchmesser 40 im wesentlichen spaltlos spannen. Im gespannten oder eingebauten Zustand der Doppelwindungslamellenringe 20, 24 liegen dann die Enden 26, 28 mit der Kreisform in Flucht, wie Fig.4 zeigt.

Bei dem nach innen, d.h. zum Nutgrund der Ringnut 16 hin spannenden Doppelwindungslamellenring 22 ragen die freien Enden der Doppelwindungen im entspannten Zustand des Doppelwindungslamellenrings 22 von der durch den Rest des Doppelwindungslamellenrings 22 gebildeten Kreisform abweichend nach außen. Die nach außen ragenden Enden 26, 28 sorgen dafür, dass die Doppelwindungen des Doppelwindungslamellenrings 22 im eingebauten Zustand nach radial innen, hier gegen den Nutgrund der Ringnut 16 im wesentlichen spaltlos spannen.

Um stufenlose, ebene Stirnflächen ohne Stufen zu erzielen, weisen die Stahlbänder der Doppelwindungslamellenringe 20, 22, 24 im Bereich der freien Enden 26, 28 je eine Kröpfung 30 auf (Fig.3).

Wie aus Fig.1 hervorgeht, weisen die beiden Rohre 6, 8 einen radialen Überlappungsbereich 32 auf, dergestalt, dass eines der Rohre 6 einen axial vorspringenden Ringbund 34 hat, welcher in eine komplementäre, ringförmige Ausnehmung 36 des anderen Rohres 8 eingreift. Zur Aufnahme der drei Doppelwindungslamellenringe 20, 22, 24 ist die Ringnut 16 in dem axial vorspringenden Ringbund 34 des einen Rohres 6 ausgebildet und nach radial außen offen. Eine radial äußere Umfangsfläche 38 des Ringbunds 34 und eine radial innere Umfangsfläche 40 der Ausnehmung 36 liegen dabei auf gedachten Zylinderflächen, welche koaxial zu einer Rohrachse 42 sind. Die Stirnfläche des Ringbundes 34 des einen Rohres 6 ist von einer ringförmigen Bodenfläche der Ausnehmung 36 des anderen Rohres 8 durch einen kleinen Spalt 44 beabstandet, welcher Wärmedehnungen der Rohre 6, 8 in axialer Richtung zulässt.

Im Zusammenhang mit Lamellenringen wird unter dem Arbeitsdurchmesser der Durchmesser der Fläche verstanden, welche der den oder die Lamellenringe aufnehmenden Ringnut 16 gegenüberliegt und entlang welcher das Druckmedium infolge des Druckgefälles von der Druckseite zur Umweltseite strömen würde. Im vorliegenden Fall bildet folglich die radial innere Umfangsfläche 40 der Ausnehmung 36 des anderen Rohres 8 den Arbeitsdurchmesser, gegen welchen die Doppelwindungslamellenringe 20, 24 radial spannen.

Die jeweils anderen Umfangsflächen der Doppelwindungslamellenringe 20, 22, 24 weisen je einen kleinen Spalt 46 zum Nutgrund der Ringnut 16 bzw. zum Arbeitsdurchmesser 40 auf. Hierdurch wird eine Labyrinthdichtung gebildet. Dabei steht das im Inneren 12 der Rohre 6, 8 unter Druck geführte Gas in dem radialen Spalt 44 und insbesondere an dem der Druckseite zugewandten, gegen den Arbeitsdurchmesser spannenden Doppelwindungslamellenring 20 an. Durch die wechselweise Anordnung der Doppelwindungslamellenringe 20, 22, 24 als gegen den Arbeitsdurchmesser 40 nach außen und gegen den Nutgrund der Ringnut 16 nach innen spannende Lamellenringe und der damit zwangsweise verbundenen Reihenfolge der frei gelassenen Spalte 46 - innen, außen, innen- finden hauptsächlich in Radialrichtung Strömungsumlenkungen statt, durch welche eine starke Drosslung bzw. ein hoher Druckverlust erreicht wird, so dass nur eine sehr geringe Menge und u.U. überhaupt kein Gas mehr am Arbeitsdurchmesser 40 vorbei bis zur Flachdichtung 10 gelangt.

Um eine solche labyrinthartige Umlenkung zu erzielen, ist es daher generell günstig, wenn von den mehreren axial hintereinander angeordneten Lamellenringen wenigstens der der Druckseite zugewandte Lamellenring 20 und der der Umweltseite zugewandte Lamellenring 24 gegen den Arbeitsdurchmesser 40 und wenigstens ein axial zwischen diesen Lamellenringen 20, 24 angeordneter Lamellenring 22 gegen den Nutgrund der Ringnut 16 spannen.

In Fig.6 ist eine weitere Ausführungsform gezeigt, bei welcher anstatt drei Doppelwindungslamellenringe nur ein gegen den Arbeitsdurchmesser 40 spannender Doppelwindungslamellenring 48 in der Ringnut 16 gehalten ist, deren Breite zur Gewährleistung eines geringen Axialspiels entsprechend angepasst ist. Fig.7 veranschaulicht eine Ausführungsform, bei welcher anstatt drei Doppelwindungslamellenringe drei einfach gewundene Lamellenringe 50, 52, 54 aus einem in einer Ebene verlaufenden gleich breitem Stahlband oder anderem Metall in der Ringnut 16 gehalten sind. Wie leicht vorstellbar ist, weist ein solcher einfach gewundener Lamellenring 50, 52, 54 zwischen seinen freien Ende eine Stoßöffnung auf, durch welche die Spannung gegen den Arbeitsdurchmesser 40 einstellbar ist. Die drei einfach gewundenen Lamellenringe 50, 52, 54 sind somit allesamt als außen spannende Lamellenringe gegen die radial innere Umfangsfläche 40 der Ausnehmung 36 des anderen Rohres 8 gespannt.

In Fig.8 ist schließlich eine Ausführungsform gezeigt, bei welcher zwei einfach gewundene, nach radial außen gegen den Arbeitsdurchmesser 40 gespannte Kegel-Lamellenringe 56, 58 aus einem nach Art einer Tellerfeder kegelförmig geformten Stahlband zur Anwendung kommen, wobei sie bezüglich der Kegelform axial gegenläufig in der Ringnut 16 angeordnet sind. Aufgrund der Neigung der Kegel-Lamellenringe 56, 58 können die Kanten des Stahlbands als Dichtkanten 60 an den Nutflächen der Ringnut 16 unter Vorspannung dicht anliegen.

Die Erfindung ist nicht auf die beschriebenen Ausführungsformen beschränkt. Vielmehr sind weitere Arten von Lamellenringen und Kombinationen von verschiedenen Lamellenringen in einer einzigen Ringnut denkbar.

Gemäß einer weiteren, in den Figuren nicht gezeigten Ausführungsform können beide Rohre 6, 8 an ihren Enden eine axiale Ausnehmung wie die Ausnehmung 36 aufweisen, in welche ein separater, bezüglich seiner Mittelebene symmetrischer Ring axial eingreift, der mit zwei axial nebeneinander und auf demselben Durchmesser angeordneten Ringnuten versehen ist. Dann ist die eine Ringnut dem Arbeitsdurchmesser des einen Rohres 6 und die andere Ringnut dem Arbeitsdurchmesser des anderen Rohres 8 zugeordnet. In diesem Fall können die Rohrenden vorteilhaft als standardisierte Bauteile gefertigt werden.

## Patentansprüche

1. Flanschverbindung (1) mit wenigstens einer zwischen den einander zugewandten Flanschflächen (2, 4) von ein unter Druck stehendes Medium speichernden oder führenden Bauelementen (6, 8) wie Leitungen oder Behälterteilen gehaltenen Flachdichtung (10), **dadurch gekennzeichnet, dass** in Richtung des Druckgefälles von der Druckseite zur Umweltseite gesehen der Flachdichtung (10) wenigstens ein in einer Ringnut (16) gehaltener und gegen einen der Ringnut (16) radial gegenüber liegenden Arbeitsdurchmesser (40) im wesentlichen spaltlos gespannter Lamellenring (20, 22, 24; 48; 50, 52, 54; 56; 58) vorgeordnet ist.

2. Flanschverbindung nach Anspruch 1, **dadurch gekennzeichnet, dass** der wenigstens eine Lamellenring (20, 22, 24; 48; 50, 52, 54; 56; 58) in der Ringnut (16) mit geringem Axialspiel gehalten ist.

3. Flanschverbindung nach Anspruch 2, **dadurch gekennzeichnet, dass** der wenigstens eine Lamellenring (20, 22, 24; 48; 50, 52, 54; 56; 58) in der Ringnut (16) parallel zur Ebene der Flanschflächen (2, 4) angeordnet ist.

4. Flanschverbindung nach wenigstens einem der vorhergehenden Ansprüche, **dadurch gekennzeichnet, dass** in der Ringnut (16) mehrere Lamellenringe (20, 22, 24; 50, 52, 54; 56; 58) axial hintereinander angeordnet sind.

5. Flanschverbindung nach Anspruch 4, **dadurch gekennzeichnet, dass** von den mehreren axial hintereinander angeordneten Lamellenringen (20, 22, 24) wenigstens der der Druckseite zugewandte Lamellenring (20) und der der Umweltseite zugewandte Lamellenring (24) gegen den Arbeitsdurchmesser und wenigstens ein axial zwischen diesen Lamellenringen (20, 24) angeordneter Lamellenring (22) gegen einen Nutgrund der Ringnut (16) spannen.

6. Flanschverbindung nach wenigstens einem der vorhergehenden Ansprüche, **dadurch gekennzeichnet, dass** der Lamellenring (50, 52, 54; 56; 58) ein einfach gewundener Lamellenring mit axialer Stoßöffnung aus einem in einer Ebene verlaufenden Stahlband ist.

7. Flanschverbindung nach wenigstens einem der Ansprüche 1 bis 5, **dadurch gekennzeichnet, dass** der Lamellenring ein einfach gewundener Teller-Lamellenring (56; 58) aus einem nach Art einer Tellerfeder tellerförmig geformtem Stahlband ist.

8. Flanschverbindung nach Anspruch 7, **dadurch gekennzeichnet, dass** wenigstens ein Paar aus zwei bezüglich der Kegelform axial gegenläufig angeordneten Teller-Lamellenringen (56; 58) vorgesehen ist.

9. Flanschverbindung nach wenigstens einem der Ansprüche 1 bis 5, **dadurch gekennzeichnet, dass** der Lamellenring ein Doppelwindungslamellenring (20, 22, 24) aus einem gleich breitem Stahlband oder anderem Metall ist, wobei die Enden (26, 28) der Doppelwindungen im entspannten Zustand des Doppelwindungslamellenrings (20, 22, 24) von einer durch den Rest des Doppelwindungslamellenrings gebildeten Kreisform abweichend nach innen oder nach außen ragen und im gespannten Zustand des Doppelwindungslamellenrings (20, 22, 24) mit dieser Kreisform fluchten.

10. Flanschverbindung nach wenigstens einem der vorhergehenden Ansprüche, **dadurch gekennzeichnet, dass** die beiden Bauelemente (6, 8) einen radialen Überlappungsbereich (32) aufweisen, dergestalt, dass eines der Bauelemente (6) einen axial vorspringenden Ringbund (34) aufweist, welcher in eine komplementäre, ringförmige Ausnehmung (36) des anderen Bauelements (8) eingreift, deren radial innere Umfangsfläche (40) den Arbeitsdurchmesser bildet.

11. Flanschverbindung nach Anspruch 10, **dadurch gekennzeichnet, dass** die nach radial außen offene Ringnut (16) in dem axial vorspringenden Ringbund (34) des einen Bauelements (6) ausgebildet ist.

## Claims

1. A flange connection (1) comprising at least one flat gasket (10) supported between opposing flange surfaces (2, 4) of components (6, 8) like conduits or container portions that store or carry a pressurized medium, **characterized in that** at least one multi-plate ring (20, 22, 24; 48; 50, 52, 54; 56; 58) is disposed in front of the flat gasket (10) in a direction of a pressure drop from a pressure side to an ambient side and wherein the at least one multi plate ring is supported in an annular groove (16) and clamped essentially gap free against an operating diameter (40) disposed radially opposite to the ring groove.

2. A flange connection according to claim 1, **characterized in that** the at least one multi-plate ring (20, 22, 24; 48; 50, 52, 54, 56; 58) is supported in the annular groove (16) with a small axial clearance.

3. A flange connection according to claim 2, **characterized in that** the at least one multi-plate ring (20, 22, 24; 48; 50, 52, 54; 56; 58) is disposed in the annular groove (16) parallel to a plane of the flange surfaces (2, 4).

4. A flange connection according to at least one of the preceding claims, **characterized in that** plural multi-plate rings (20, 22, 24; 48; 50, 52, 54; 56; 58) are disposed axially behind one another in the annular groove (16).

5. A flange connection according to claim 4, **characterized in that** out of plural multi-plate rings (20, 22, 24) disposed axially behind one another, at least the multi-plate ring (20) facing the pressure side and the multi-plate (24) facing the ambient side clamp against the operating diameter and at least one multi-plate ring (22) disposed axially between the multi-plate rings (20, 24) clamps against the groove base of the annular groove (16).

6. A flange connection according to at least one of the preceding claims, **characterized in that** the multi-plate ring (50, 52, 54; 56; 58) is a simply wound multi-plate ring with an axial joint opening made from a steel band extending in one plane.

7. A flange connection according to at least one of the claims 1 through 5, **characterized in that** the multi-plate ring is a simply wound disk shaped multi-plate ring (56; 59) made from a steel band that is disk shaped like a disk spring.

8. A flange connection according to claim 7, **characterized in that** at least one pair of disk shaped multi-plate rings (56, 58) is provided, which are disposed in opposite axial directions with respect to their cone shapes.

9. A flange connection according to at least one of the claims 1 through 5, **characterized in that** the multi-plate ring is a double wound multi-plate ring (20, 22, 24) made from a steel band or other metal band with uniform width, wherein the ends (26, 28) of the double windings protrude inward or outward in an unloaded condition of the double wound multi-plate ring (20, 22, 24) and deviate from a circular shape defined by the rest of the double wound multi-plate ring, and are aligned flush with the circular shape in a loaded condition of the double wound multi-plate ring (20, 22, 24).

10. A flange connection according to at least one of the preceding claims, **characterized in that** the two components (6, 8) comprise a radial overlap portion (32), so that one of the components (6) includes an axially protruding annular collar (34), which engages a complementary annular recess (36) of the other component (8), wherein the radial inner circumferential surface (40) of the recess forms the operating diameter.

11. A flange connection according to claim 10, **characterized in that** the ring groove (16), which is radially open towards the outside, is configured in the axially protruding annular collar (34) of the one component (6).

## Revendications

1. Raccord à bride (1) avec au moins une étanchéité plate (10) maintenue entre les surfaces de bride (2, 4) tournées l'une vers l'autre partie de composants qui stockent ou conduisent (6, 8) un fluide sous pression comme des conduites ou des parties de réservoir, **caractérisé en ce qu'**au moins un anneau à lamelles (20, 22, 24 ; 48, 50, 52, 54 ; 56 ; 58), maintenu dans une rainure annulaire (16) et tendu substantiellement sans fente contre un diamètre de travail (40) situé radialement en face de la rainure annulaire (16), est placé en amont en direction de la chute de pression, ceci étant vu du côté refoulement vers le côté environnement de l'étanchéité plate (10).

2. Raccord à bride selon la revendication 1, **caractérisé en ce que** l'anneau à lamelles qui existe au moins (20, 22, 24 ; 48, 50, 52, 54 ; 56 ; 58) est maintenu dans la rainure annulaire (16) avec un faible jeu axial.

3. Raccord à bride selon la revendication 2, **caractérisé en ce que** l'anneau à lamelles qui existe au moins (20, 22, 24 ; 48, 50, 52, 54 ; 56 ; 58) est placé dans la rainure annulaire (16) parallèlement au plan des surfaces de la bride (2, 4).

4. Raccord à bride selon au moins l'une des revendications précédentes, **caractérisé en ce que** plusieurs anneaux à lamelles (20, 22, 24 ; 48, 50, 52, 54 ; 56 ; 58) sont placés l'un derrière l'autre dans le sens axial dans la rainure annulaire (16).

5. Raccord à bride selon la revendication 4, **caractérisé en ce que** parmi les plusieurs anneaux à lamelles (20, 22, 24) placés l'un derrière l'autre dans le sens axial au moins l'anneau à lamelles (20) tourné vers le côté refoulement et l'anneau à lamelles (24) tourné vers le côté environnement sont tendus contre le diamètre de travail et au moins un anneau à lamelles (22) placé dans le sens axial entre ces anneaux à lamelles (20, 24) est tendu contre un fond de gorge de la rainure annulaire (16).

6. Raccord à bride selon au moins l'une des revendications précédentes, **caractérisé en ce que** l'anneau à lamelles (50, 52, 54 ; 56 ; 58) est un anneau à lamelles à simple enroulement avec une ouverture de choc axiale en un ruban d'acier situé dans un plan.

7. Raccord à bride selon au moins l'une des revendications 1 à 5, **caractérisé en ce que** l'anneau à lamelles est un anneau à lamelles à plateau à simple enroulement (56 ; 58) formé en un ruban d'acier en forme de disque selon le type d'un ressort à disque.

8. Raccord à bride selon la revendication 7, **caractérise en ce qu'**il est prévu au moins une paire de deux anneaux à lamelles à disque (56 ; 58) placés en sens contraire axialement par rapport à la forme conique.

9. Raccord à bride selon au moins l'une des revendications 1 à 5, **caractérisé en ce que** l'anneau à lamelles est un anneau à lamelles à double enroulement (20, 22, 24) en un ruban d'acier de largeur égale ou en un autre métal, les extrémités (26, 28) des doubles enroulements, lorsque l'anneau à lamelles à double enroulement (20, 22, 24) est à l'état détendu, faisant saillie vers l'intérieur ou vers l'extérieur en divergeant d'une forme circulaire formée par le reste de l'anneau à lamelles à double enroulement et, lorsque l'anneau à lamelles à double enroulement (20, 22, 24) est à l'état tendu, étant alignées avec cette forme circulaire.

10. Raccord à bride selon au moins l'une des revendications précédentes, **caractérisé en ce que** les deux composants (6, 8) présentent une zone de chevauchement radial (32) telle qu'un des composants (6) présente un épaulement annulaire (34) qui fait saillie axialement qui s'engrène dans un évidement complémentaire en forme d'anneau (36) de l'autre composant (8) dont la surface périphérique intérieure radiale (40) forme le diamètre de travail.

11. Raccord à bride selon la revendication 10, **caractérisé en ce que** la rainure annulaire (16) ouverte vers l'extérieur dans le sens radial est configurée dans un épaulement annulaire (34) qui fait saillie axialement de l'un des composants (6).
